# EUROPEAN PATENT SPECIFICATION

(11) **EP 2 167 613 B1**
(45) Date of publication and mention of the grant of the patent: **06.11.2019**
(21) Application number: 08779092.9
(22) Date of filing: 27.06.2008
(51) Int. Cl.: C10G 2/00, B09B 3/00, C10B 53/02, C10J 3/66, C10K 1/00, C10K 3/00, F23G 5/00, B01J 19/08, C10J 3/08, C10J 3/20, C10K 1/02, C10K 1/10, C10K 1/14, C10K 1/32, C10K 3/04, C10B 49/04

(54) **PROCESS FOR PRODUCTION OF BIOFUELS**
VERFAHREN ZUR HERSTELLUNG VON BIOBRENNSTOFFEN
PROCÉDÉ POUR LE TRAITEMENT DE BIOCARBURANTS

(30) Priority: 27.06.2007 NO 20073321
(43) Date of publication of application: 31.03.2010
(73) Proprietor: Tønseth, Erik, 0789 Oslo (NO)
(72) Inventor: Tønseth, Erik, 0789 Oslo (NO)
(74) Representative: Grünecker Patent- und Rechtsanwälte PartG mbB
(86) International application number: PCT/NO2008/000245
(87) International publication number: WO 2009/002191

(56) References cited:
- EP-A- 1 419 220
- WO-A-03/095072
- WO-A-2004/087840
- WO-A-2007/000607
- WO-A-2007/042559

## Description

The invention concerns a method for producing hydrocarbon based fuels from waste and biomass including wood and/or other cellulose containing biomass.

### Background

The Intergovernmental Panel of Climate Change has recently released its fourth assessment report on climate change (IPCC 4AR), stating with very high confidence that human activities results in a climate forcing that may give dangerously strong climate changes in many regions of the world unless there is introduced substantial decreases in the emissions of greenhouse gases, especially carbon dioxide in the coming decades. The scientific discoveries and climate forcing knowledge expressed in IPCC 4AR is expected to result in both international agreements and national decisions for restrictions on emissions of carbon dioxide of fossil origin in the coming years.

One of the major contributing sectors of carbon dioxide emissions in developed countries is the transport sector, which presently is almost fully run on derivatives of fossil oil. The present transport sector utilises vehicles dependent on a chemical energy carrier able to be carried in the vehicles and delivering the energy to the engines of the vehicles, thus the problem of reducing greenhouse gas emissions from the transport sector becomes a question of finding another chemical energy carrier with sufficiently high energy density and which do not add net carbon to the earth carbon cycle.

Fuels made from waste and/or biomasses are very suited as replacement for fossil fuels such as gasoline and diesel. These fuels, e.g. bioethanol and biodiesel respectively, have a sufficient energy density suitable for present day transportation vehicles, they have similar chemical and physical properties such that they may be distributed and handled by present fuel distribution systems, and present day vehicles may be run on fossil fuels admixed with certain amounts of biofuels. Also, the technology for making engines run on pure biofuels is well developed, such that biofuels have capacity of eliminating greenhouse gas emissions from vehicles. Biofuels are presently made from agricultural leftovers and especially designated crops, so-called energy crops. However, the need for reserving arable land for food production and the large fuel volumes required by the transport sector calls for use of wood and other cellulose containing biomass as raw material in the future.

### Prior art

In a paper by Borriegter et al. presented at Pyrolysis and Gasification of Biomass and Waste, held at Strasbourg, France in 30 September - 1 October 2002, it is suggested using a biomass gasifier for producing a syngas from solid biomass and then feeding the syngas to a Fischer-Tropsch reactor for converting the syngas by the Fischer-Tropsch synthesis to biodiesel of high purity termed "green diesel" to distinguish this product from ordinary biodiesel made by esterfication of vegetable oils. An integrated biomass gasifier (BG) and Fischer-Tropsch (FT) plant may obtain large production volumes, and have an additional advantage in that the syngas after FT-synthesis contains sufficient rest energy to be employed in a combined cycle plant for production of electricity.

Conventional biomass gasifiers, such as the widely used circulating fluidised bed (CFB) gasifiers which operates with air as gasification medium at near atmospheric pressure and about 850 °C, produces a raw biosyngas with typical compositions of 15-20 parts by volume of CO, H₂, and CO₂, 10-15 parts by volume H₂O, about 40 parts by volume N₂, about 5 parts by volume CH₄, and smaller amounts of C₂H₂, C₂H₄, C₂H₆, benzene, toluene, xylenes and tars. In addition there will be smaller amounts of inorganic impurities such as NH₃, HCl, H₂S, COS, CS₂, HCN, HBr, dust, soot, and ash. The syngas components H₂ and CO of the raw biosyngas will typically contain somewhat less than half of the chemical energy, while the rest are mainly contained by the CH₄ and the other hydrocarbons.

The Fischer-Tropsch synthesis is a catalytically conversion of CO and H₂ to hydrocarbons:

1 CO + 2 H₂ ↔ -(CH₂)- + H₂O

The synthesis consumes hydrogen and carbon monoxide in a ratio of H₂:CO = 2. When the ratio in the feed gas is lower, it may be adjusted in a water-gas shift reaction:

2 CO + H₂O↔ CO₂ + H₂

The catalysts of the FT-synthesis are sensitive towards poisoning from several of the compounds found in raw biosyngas. Thus the raw syngas needs to be purified before being used as feed gas in the FT-synthesis. Typical limits for safe levels of some compounds are:

| | |
|---|---|
| H₂S + COS + CS₂ | < 1 ppmV |
| NH₃ + HCN | < 1 ppmV |
| HCl + HBr + HF | < 10 ppbV |
| alkaline metals, solids, tars | < dew point |
| class 2 tars | < 1 ppmV |

There are available conventional solutions for cleaning the feed gas for all compounds below the levels specified above, except for tars. Removal of tars remains a serious problem for production of biofuels from solid biomass by biomass gasification and Fischer-Tropsch synthesis of the gasified biomass, and has so far prevented commercial exploitation of this process route.

WO 2007/000607 discloses a method for removing solid remnants termed "char" in the document from an off-gas produced by gasifying waste in a reactor at under-stochiometric conditions. The char may include tarry compounds. The document teaches that subjecting the off-gas including char to a plasma treatment unit in presence of oxygen and optionally steam, may overcome or at least mitigate the problem with char in the off-gas.

WO 2004/087840 discloses a two-stage plasma process for converting waste having organic and inorganic components into fuel gas which comprises in the first stage vitrifying or melting the inorganic components of the waste and partially gasifying the organic components and in the second stage completing the gasification of the organic components.

WO 2003/095072 relates to a system for treating the off-gas from a waste treatment system that reduces the carbon black present in the off-gas while avoiding the production of nitrogen oxides and other pollutants. The system includes an afterburner using a plasma torch having a nitrogen-free working gas such as a carbon dioxide and oxygen mixture.

WO 2007/042559 discloses a device for gasifying biomass and organic waste at a high temperature and with an external power supply for generating a high-quality synthesis gas.

EP1419220 relates to an apparatus and process for ecologically acceptable production of electrical energy from renewable sources of fuel such as waste by means of gasification and pyrolysis utilizing plasma arc heating technology.

### Objective of the invention

The main objective of this invention is to provide a method for production of biofuels by combined biomass gasification and Fischer-Tropsch synthesis which eliminate the problem with tar poisoning the catalysts in the Fischer-Tropsch synthesis.

It is also an objective of this invention to provide a method that may allow employing waste in combination with or as a substitute for biomass as raw material for the syngas fed to the Fischer-Tropsch synthesis.

The objectives of the invention may be obtained by the features as set forth in the following description of the invention and/or in the appended claims.

### Description of the invention

The invention is based on the realisation that a combination of a strong heating of a raw syngas exiting a gasifier causing an atomisation of substantially all compounds of the raw syngas and thus destruction of all organic compounds in the raw syngas including tars, dioxins etc. and a subsequent rapid condensation of the atomised syngas in certain anaerobic conditions, will result in that practically all organic elements in the raw syngas will be converted to low-molecular anaerobic combustion products, primarily CO, CO₂, H₂O, and H₂. Thus the problem with tar in a raw syngas from gasifying biomass becomes practically eliminated.

In a first aspect, the invention is a method for producing biofuels from waste and/or biomass, comprising:
- gasification of the waste/biomass in anaerobic conditions to produce a gasified biomass/waste material,
- injecting the gasified biomass/waste material into an arc discharge zone of a plasma torch, where the plasma torch provides an air jet at a velocity of 600-800 m/s and a temperature in the range from 3000 to 5000 °C in the arc discharge zone, elevating the temperature of the biosyngas to at least 1250 °C, and injecting fresh air into the arc discharge zone to maintain an oxidation degree within 0.2 < CO₂/(CO+CO₂) < 0.4,
- injecting the gas stream exiting the arc discharge zone into a decomposition reactor where the residence time of the gas is around 2 seconds and the temperature is maintained at about 1250 °C
- chilling the heat treated gas mixture to a temperature of 150 °C to form a heat treated biosyngas,
- subjecting the heat treated biosyngas to cleaning measures for removing elements/compounds which are poisonous towards the catalysts of the Fischer-Tropsch synthesis to at least a tolerable level for the catalysts of the Fischer-Tropsch synthesis, and
- passing the cleaned heat treated biosyngas through a Fischer-Tropsch synthesis for production of biofuels.

Eventual inorganic elements present in the raw syngas such as metals, sulphur, nitrogen etc. will form various oxides and hydrides, and should be substantially removed before entering the Fischer-Tropsch synthesis. Other poisonous compounds may e.g. be compounds containing alkaline earth metals, and halogens.

The biosyngas may advantageously be conditioned before entering the Fischer-Tropsch synthesis, i.e. harmonising the ratio between hydrogen and carbon monoxide to H₂:CO = 2, or at least increasing the ratio towards the harmonised level of 2 by performing a water-gas shift reaction of the heat treated biosyngas. The conditioning may also include removal of excess CO₂ by a conventional absorption process, by using water, amine or other known CO₂-absorbents. The conditioning may also include removal of some or all N₂ in the biosyngas.

The term "biofuel" as used herein includes any hydrocarbon based fuel and other hydrocarbon based products where the hydrocarbons are made by Fischer-Tropsch synthesis of gasified biomass and/or waste material. The hydrocarbons may be more or less aliphatic single- or poly-branched hydrocarbon chains from 2 to more than 20 carbon atoms, and may also include a fraction of aromatic hydrocarbons. Hydrocarbons from 9 to 20 carbon atoms form the diesel fraction.

The term "gasification" as used herein means converting solid or liquid waste and/or biomass by evaporation and/or anaerobic decomposition to gas phase. The term "raw biosyngas" as used herein means any gas exiting the gasification step of waste materials and/or biomass. The term as used herein includes the case when the syngas is produced from gasification of only waste materials. The term "heat treated biosyngas" as used herein means the gas mixture resulting from the atomisation and subsequent condensation of the raw biosyngas. The term "cleaned biosyngas" as used herein means the gas mixture resulting from removal of compounds poisonous for the catalysts in the Fischer-Tropsch synthesis from the heat treated biosyngas. The term "conditioned biosyngas" as used herein means biosyngas where the H₂:CO ratio has been adjusted by a water-shift reaction, and may also include removal of excess CO₂. The term "anaerobic" as used herein means a process in under-stochiometric amounts of oxygen, which is a reducing environment. The term "waste" as used herein includes any carbon or hydrocarbon containing material waste or virgin material, including hazardous waste materials (not radioactive hazards).

The invention is not limited to any specific gasification process or gasification equipment, it may employ any known and conceivable method for forming a gaseous mixture comprising CO, CO₂, H₂O and H₂ from waste and/or biomass. However, the gasification process will normally be a heating of the waste and/or biomass with regulated amounts of air as gasification medium to temperatures in the range of 500 to 1500 °C, where the amount of air should be regulated to ensure under-stochiometric amounts of oxygen in the process such that the waste/biomass forms a gaseous mixture comprising CO, CO₂, H₂O and H₂. Both the biomass and waste contains inorganic compounds that results in liquid or solid remains in the lower part of the gasifier. Biomass will generally contain less inorganic material than waste. The gasifier should have means for taking out the inorganic residues accumulating in the lower lying section of the gasifier.

A proven and well known conventional technique for gasification of large volumes of biomass is the circulating fluid bed gasifier mentioned above operating with air as gasification medium at about atmospheric pressure and 850 °C, and which gives a raw biosyngas with typical compositions of 15-20 parts by volume of CO, H₂, and CO₂, 10-15 parts by volume H₂O, about 40 parts by volume N₂, about 5 parts by volume CH₄, and smaller amounts of C₂H₂, C₂H₄, C₂H₆, benzene, toluene, xylenes and tars. In addition there will be smaller amounts of inorganic impurities such as NH₃, HCl, H₂S, COS, CS₂, HCN, HBr, dust, soot, and ash.

A proven technology for gasification of solid waste materials is counter counter-current-flow shaft gasifiers known from the steel industry. These gasifiers are fed with solid waste material at the top, usually through a gas tight sluice at the top. The waste is at the upper section heated to a temperature in the order of 300-500 °C such that all volatile organic material and water is evaporated. Pre-heated air is simultaneously injected in the bottom of the gasifier and the remaining carbon is gasified in the bottom at a temperature of about 1500°C. The non-combustible materials like metals, ashes etc. are tapped of as a metal alloy and a non-leaching slag. This type of shaft gasifier combines rugged design with low thermal losses and long lining life. It is fully sealed so that all material that leaves the gasifier is either treated at high temperature (melted) or sent to the plasma powered decomposition reactor for high temperature treatment.

The Fischer-Tropsch synthesis is well established conventional technology using iron-based catalysts or cobalt-based catalysts. The FT-synthesis is well known to a person skilled in the art and need no further description. The invention is not limited to the choice of Fischer-Tropsch reactor design and/or operation. Any known and conceivable Fischer-Tropsch reactor and synthesis process may be employed by the invention.

The catalysts of the Fischer-Tropsch synthesis are very sensitive towards poisoning by certain elements and solid particles in the feed gas. The heat treated biosyngas according to the invention will contain small amounts of sulphur oxides/hydrides, nitrogen oxides/hydrides, halogen hydrides, and solid particles of alkaline metal oxides/hydrides that need to be lowered below the levels specified above. There are well established conventional cleaning technologies based on gas scrubbing and/or filtration available for removing all impurities in the heat treated biosyngas according to the invention. Also, the invention is not limited to a specific choice of cleaning method or device, any known and conceivable gas cleaning technology may be employed as long as the impurity levels reaches below the levels specified in the prior art section above. Such technologies are well known to a person skilled in the art and need no further description.

The invention is in principle not restricted to any specific choice of heat source for heat treating the raw biosyngas exiting the gasifier. However, the heat-treatment should heat the entire stream of raw biosyngas exiting the gasifier to a temperature which ensures that practically all organic compounds including eventual halo-organic compounds in the gas stream are fully decomposed/atomised. This requirement makes heating by use of electric arcs very suited, since these heat sources may readily provide very intense heat under conditions which makes it relatively easy to obtain an environment which is sufficiently reducing (oxygen depleted) to ensure that the organic constituents in the decomposed/atomised gas stream condenses to mainly low molecular combustion products such as CO, CO₂, H₂O and H₂. This requirement will be fulfilled by a heating the gas stream to a temperature of at least about 1250 °C, but preferably much higher, with a oxidation degree in the range of 0.2 < CO₂/(CO+CO₂) < 0.4. This degree of oxidation, that is reducing environment will suppress formation of unwanted combustion products such as NOₓ and HCN to acceptable levels, and it will ensure that large organic and halo-organic compounds such as tars and dioxins, respectively cannot be formed.

The feature of heat treating the raw biosyngas to a temperature decomposing any tar and organic compound such as hydrocarbons in the raw biosyngas in a reducing environment ensuring conversion to low molecular combustion products eliminates the problem with tar poisoning the Fischer-Tropsch catalysts. The conversion of tar and organic compounds in the raw biosyngas offer another advantage in that the energy content in those compounds are converted to syngas and thus made available for the Fischer-Tropsch synthesis. Thus the inventive method obtains a higher yield as measured by produced biofuels than prior art solutions. A further advantage of the invention is that it will become possible to safely use any carbon or hydrocarbon containing materials including hazardous waste materials since all hazardous compounds are fully decomposed by the heat treatment and condensed to low molecular combustion products.

The inventive combination of a gasifier producing a raw syngas from biomass and/or waste materials, heating the raw syngas to at least about 1250 °C in an environment with a oxidation degree in the range of 0.2 < CO₂/(CO+CO₂) < 0.4, removal of inorganic compounds from the heat treated syngas, eventual conditioning of the syngas before entering into a Fischer-Tropsch synthesis, provides a safe and cost-effective production method for biofuels from any hydrocarbon and carbon containing material such as municipal waste, industrial waste fractions, waste from food industry, waste from agriculture, fish processing industry, biomass from forestry etc. These material sources provide a cheap and abundant source allowing large scale production of biofuels and simultaneous reduction of waste problems.

The heat treated syngas exits the heat treatment with a temperature in the order of 1000-1500 °C and should be cooled to about 100-200 °C before cleaning. This heat extraction may advantageously be utilised, for instance by a steam turbine to produce mechanical work or electricity.

### Example of an embodiment of the invention

The invention will be verified and described in further detail by providing an example of an embodiment carrying out the method according to the invention. This embodiment should not be considered as a limitation of the general inventive idea of decomposition and subsequent condensation to convert all organic including halo-organic compounds in the syngas to low-molecular anaerobic combustion products. Any combination of gasifier, heat treatment device able to heat the raw syngas to at least 1250 °C and then rapidly condensate the atomised gas/plasma gas to low molecular anaerobic combustion products, and Fischer-Tropsch reactor are within the inventive scope of this invention.

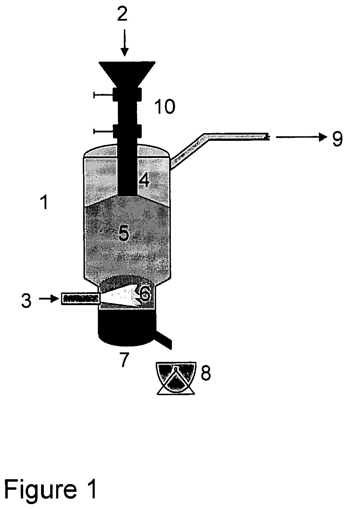

The gasifier used in the method according to an example embodiment of the invention is a counter counter-current-flow shaft as shown in Figure 1. This gasifier 1 comprises a waste/biomass inlet 10 with a two-port sluice system for introduction of waste/biomass 2 in the upper region 4 of the gasifier 1. There the temperature will typically be in the order of 200-500 °C such that all volatile organic material and water is evaporated. The gasifier is sealed towards ambient atmosphere, and the introduction of fresh air is controlled to give an oxygen deficit in the gasifier. Thus, as the waste/biomass 2 descends down into the bulk zone 5 of the gasifier 1, it heats up in a reduced atmosphere and becomes gradually transformed to a low grade charcoal containing inorganic material. In the case of using waste materials, these inorganic materials may be i.e. glass, metal and minerals, typically containing around 10 - 30 % of fix carbon. Fix carbon means carbon that does not evaporate in the gasifier but remains down trough the carburisation zone. If the fix carbon in the waste becomes too low, biomass or other carbon source should be fed to the gasifier to provide the required temperature in the bottom of the gasifier.

The charcoal descending from the carbonization zone 5 into the partial oxidation and vitrification zone 6 is gasified by partly combustion with preheated air 3. The partial combustion provides a temperature in the bottom of 1.450 - 1.550°C. At this temperature the inorganic materials melt into a slag and a metal alloy 8 accumulating in the lowest section 7 of the gasifier 1. The accumulated liquid slag/metal alloy 8 should be tapped off at specific intervals. Normally, waste materials contain enough silica to provide a glassy and leach resistant slag. Otherwise silica in the form of glass containing waste or a silica-containing mineral should be added.

The inorganic material in the waste/biomass melts in the gasifier and appears in the following manner: Precious metals like gold, silver, copper, platinum, palladium etc., form a metal alloy that can be refined in a copper smelter. Metals with higher affinity to oxygen than iron (like Al, Ti, Mg, and Ca) oxidise and dissolve in the slag. The slag fulfils the requirements to be used as construction material. Part of the iron will be dissolved in the slag as iron oxide and part of it will be dissolved in the metal alloy. By adding coal and limestone to the charge more iron will be reduced and dissolved in the metal. Volatile metals like zinc, lead, cadmium and mercury are evaporated and leave the gasifier as part of the pyrolysis gas. These metals/metal oxides need to be removed from the syngas before entry into the Fischer-Tropsch synthesis. This may be obtained by acid scrubbing, cyclones, filtering or any other conventional technique known to remove solid particles of metals/metal oxides from a gas stream.

The temperature of the tapped slag and metal 8 is 1.450 - 1.550 °C, and during storage and cooling metal and slag separates due to the difference in specific weight. The freezing point is around 800 - 1.000 °C. After about one hour the slag on the top has frozen and the ladle is transported to a dedicated place for storage and cooling. Twenty four hours after tapping the ladle is tilted around and the slag and metal fall apart due to the different in thermal expansion. The ladles are cone shaped and the metal and slag falls easily out of the ladles. The slag is leach resistant and approved for use as fill material.

For safety reasons, the gasifier is equipped with a rupture disc that bursts if the pressure in the gasifier exceeds 1.5 bar (a), and the pressure is relieved. The relief will pass a pressure relief tank where particles from the gasifier will be captured.

The small amounts of gas leaked through the lock hopper system may be sucked off and recycled together with the secondary air to the plasma generator, thereby avoiding emissions to the environment.

A suited heat source for this invention is an arc discharge reactor which may heat a gaseous stream entering the discharge zone to many thousands degrees. A plasma torch has also the advantage that the heat energy comes from electric energy, providing the possibility of atomising the gas compounds in an environment fully protected from the surrounding atmosphere and eliminating the need for introducing fuels or other forms of chemical energy carriers for providing the heat. This feature gives a plasma reactor the possibility of keeping an excellent control with the stochiometric conditions in the reaction zone (plasma/atomised gas zone) and subsequent condensation zone where the heat treated biosyngas is formed.

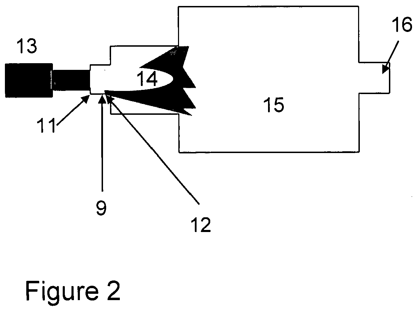

Thus, the gasified solid biomass/waste materials in outlet pipe 9 from the gasifier 1 is injected into zone 14 where it is mixed with the air jet discharged from the plasma torch 13 as shown in Figure 2. Biomass/waste in the form of gas or liquid enters the air jet in the arc discharge zone 14. The plasma torch 13 provides an air jet of high velocity and temperature (6 - 800 m/s and 3.000 - 5.000°C). The air jet provides the necessary high temperature and immense dynamic power to completely decompose all hydrocarbons - even halogenated hydrocarbons like PAH, furans, and dioxins. The plasma reactor gives the opportunity to dispose any liquid or gaseous waste/biomass materials by introducing them directly into the arc discharge zone 14. This is illustrated by reference number 12 on Figure 2. There may also be injected fresh air 11 into the arc discharge zone 14 in order to maintain the degree of oxidation within 0.2 < CO₂/(CO+CO₂) < 0.4. The decomposition of practically all larger molecules are ensured by injecting the plasma gas stream exiting zone 14 into a decomposition reactor 15 where the residence time of the gas is typically around 2 seconds and the temperature is maintained at about 1250 °C. Then the waste/biomass material is fully converted to a heat treated syngas exiting the decomposition reactor 15 through outlet pipe 16.

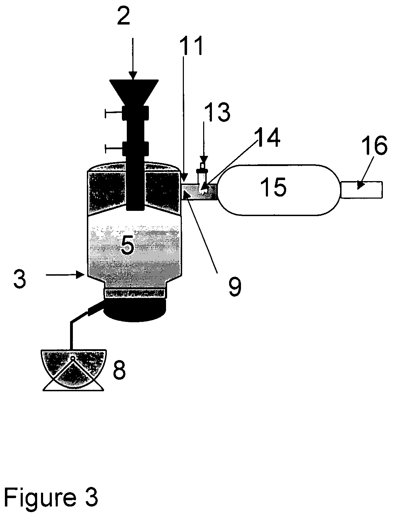

As an alternative, the plasma torch may be placed in a T-junction on the outlet pipe 9 such as shown in Figure 3. Then the raw biosyngas exiting the gasifier 1 enters pipe 9 and where it is mixed with air to obtain the required oxidising conditions (the mixing means are not shown on the Figure). Then the mixed gas of air and biosyngas is admixed with hot gas exiting the plasma torch 13 before the heated gas mixture enters the decomposition reactor 15.

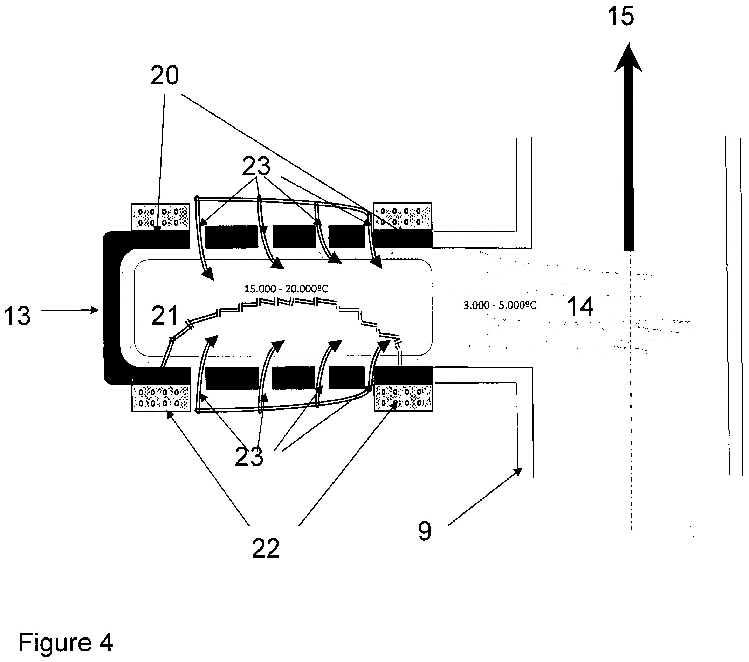

The plasma torch 13 may be configured as shown in Figure 4. The torch is formed as a cylindrical tube with a set of apertures 23 for injection of air into an electric arc 21 running from annularly shaped electrodes 20. The electric arc is rotated and controlled by annularly shaped magnets 22. The tube forming the torch is sealed in one end and open in the other for allowing exit of the heated air. The opening is directed into pipe 9, and the heated air exiting the torch has a temperature in the range of 3000 to 5000 °C.

The content of CO and CO₂ of the heat treated syngas is continuously recorded and controlled by regulating the fresh air injection 11 in order to maintain the following requirements: 0.2 < CO₂/(CO₂ + CO) < 0.4. If the oxidation ratio becomes lower than 0.1, HCN may be formed and if the oxidation ratio exceeds 0.5, the formation of NOₓ takes place. It is easy to operate the process between 0.2 and 0.4.

The heat treated syngas has a temperature of about 1250 °C when leaving the decomposition reactor 15. This temperature should be lowered to 150 °C before purification of the syngas. The extracted heat should preferably be used for production of electric energy, by for example a steam turbine driven generator.

The gas cleaning system can be designed in different ways. The two main alternatives are a wet or a combined dry and wet system.

A wet gas cleaning system can contain the following main equipment; a water quench precipitating dust and acid components, a two-stage scrubber cooling the gas and polishing the acid components including the sulphur and a wet electrostatic precipitator.

A combined dry and wet system will contain the following main equipment; a bag filter capturing the dust, a water quench precipitating the acid components and a two stage scrubber cooling the gas and polishing the acid components including the sulphur.

If the waste contains mercury there might be necessary to have an activated carbon filter at the end of the gas cleaning system.

The inventive process decomposes chlorinated and halogenated hydrocarbons and dioxin, such that no special cleaning systems to capture these elements need to be included. The plasma powered decomposition reactor decomposes all the tar components which is the main challenge to all gasification processes. The NOx content in the fuel gas is less than 30 ppm.

The conditioning of the heat treated syngas and the following Fischer-Tropsch analysis are conventional technology known to a skilled person in the art. Any such process able to condition a syngas to meet the requirements of the Fischer-Tropsch synthesis may be employed. The same applies for and any conventional Fischer-Tropsch reactor and process.

## Claims

1. Method for producing biofuels from waste and/or biomass, comprising:
- gasification of the waste/biomass in anaerobic conditions to produce a gasified biomass/waste material,
- injecting the gasified biomass/waste material into an arc discharge zone of a plasma torch, where the plasma torch provides an air jet at a velocity of 600-800 m/s and a temperature in the range from 3000 to 5000 °C in the arc discharge zone, elevating the temperature of the biosyngas to at least 1250 °C, and injecting fresh air into the arc discharge zone to maintain an oxidation degree within 0.2 < CO₂/(CO+CO₂) < 0.4,
- injecting the gas stream exiting the arc discharge zone into a decomposition reactor where the residence time of the gas is around 2 seconds and the temperature is maintained at about 1250 °C,
- chilling the heat treated gas mixture to a temperature of 150 °C to form a heat treated biosyngas,
- subjecting the heat treated biosyngas to cleaning measures for removing elements/compounds which are poisonous towards the catalysts of the Fischer-Tropsch synthesis to at least a tolerable level for the catalysts of the Fischer-Tropsch synthesis, and
- passing the cleaned heat treated biosyngas through a Fischer-Tropsch synthesis for production of biofuels.

2. Method according to claim 1, **characterised in that** the poisonous compounds are one or more of the following: compounds containing alkaline earth metals, sulphur, halogens, and nitrogen.

3. Method according to claim 1 or 2, **characterised in that** the heat treated biosyngas is conditioned by adjusting the H₂:CO ratio by a water shift reaction converting CO in the syngas to CO₂ and H₂ by reacting CO with water, before entry into the Fischer-Tropsch synthesis.

4. Method according to claim 3, **characterised in that** the conditioning of the heat treated biosyngas also comprises removal of at least a portion of the CO₂ in the biosyngas.

5. Method according to claim 4, **characterised in that** the conditioning of the heat treated biosyngas also comprises removal of at least a portion of the N₂ in the biosyngas.

6. Method according to claim 1, **characterised in that** the gasifier is fed with biomass.

7. Method according to claim 6, **characterised in that** the biomass comprises biomass containing cellulose.

8. Method according to claim 7, **characterised in that** waste comprises one or more of the following materials: municipal waste, industrial waste fractions, waste from food industry, and waste from agriculture and/or fish processing industry.

## Patentansprüche

1. Verfahren zur Herstellung von Biokraftstoffen aus Abfall und/oder Biomasse, umfassend:
- Vergasung der Abfälle/Biomasse unter anaeroben Bedingungen zur Erzeugung einer/s vergasten Biomasse/Abfallstoffs,
- Einspeisen der/s vergasten Biomasse/Abfallstoffs in eine Bogenentladungszone eines Plasmabrenners, wobei der Plasmabrenner einen Luftstrahl mit einer Geschwindigkeit von 600-800 m/s und einer Temperatur im Bereich von 3000 bis 5000 °C in der Bogenentladungszone bereitstellt, Erhöhen der Temperatur des Biosyngases auf mindestens 1250 °C und Einspritzen von Frischluft in die Bogenentladungszone, um einen Oxidationsgrad innerhalb von 0,2 < CO₂/(CO+CO₂) < 0,4 aufrechtzuerhalten,
- Einspeisen des aus der Bogenentladungszone austretenden Gasstroms in einen Zersetzungsreaktor, wobei die Verweilzeit des Gases etwa 2 Sekunden beträgt und die Temperatur auf etwa 1250 °C gehalten wird,
- Abkühlen des wärmebehandelten Gasgemisches auf eine Temperatur von 150 °C, um ein wärmebehandeltes Biosyngas zu bilden,
- Unterziehen des wärmebehandelten Biosyngases Reinigungsmaßnahmen zum Entfernen von Elementen/Verbindungen, die gegenüber den Katalysatoren der Fischer-Tropsch-Synthese giftig sind, mindestens bis zu einem tolerierbaren Niveau für die Katalysatoren der Fischer-Tropsch-Synthese, und
- Durchleiten des gereinigten wärmebehandelten Biosyngases durch eine Fischer-Tropsch-Synthese zur Herstellung von Biokraftstoffen.

2. Das Verfahren nach Anspruch 1, **dadurch gekennzeichnet, dass** die giftigen Verbindungen eine oder mehrere der folgenden sind: Verbindungen, die Erdalkalimetalle, Schwefel, Halogene und Stickstoff enthalten.

3. Das Verfahren nach Anspruch 1 oder 2, **dadurch gekennzeichnet, dass** das wärmebehandelte Biosyngas durch Einstellen des H₂:CO-Verhältnisses mittels einer Wasserverschiebungsreaktion, die CO im Syngas in CO₂ und H₂ umwandelt, indem CO mit Wasser reagiert, konditioniert wird, bevor es in die Fischer-Tropsch-Synthese eintritt.

4. Das Verfahren nach Anspruch 3, **dadurch gekennzeichnet, dass** die Konditionierung des wärmebehandelten Biosyngases auch die Entfernung von mindestens einem Teil des CO₂ in dem Biosyngas umfasst.

5. Das Verfahren nach Anspruch 4, **dadurch gekennzeichnet, dass** die Konditionierung des wärmebehandelten Biosyngases auch die Entfernung von mindestens einem Teil des N₂ in dem Biosyngas umfasst.

6. Das Verfahren nach Anspruch 1, **dadurch gekennzeichnet, dass** der Vergaser mit Biomasse beschickt wird.

7. Das Verfahren nach Anspruch 6, **dadurch gekennzeichnet, dass** die Biomasse Cellulose enthaltende Biomasse umfasst.

8. Das Verfahren nach Anspruch 7, **dadurch gekennzeichnet, dass** der Abfall eines oder mehrere der folgenden Materialien umfasst: kommunale Abfälle, Industrieabfallfraktionen, Abfälle aus der Lebensmittelindustrie und Abfälle aus der Landwirtschaft und/oder der fischverarbeitenden Industrie.

## Revendications

1. Procédé de production de biocarburants à partir de déchets et/ou d'une biomasse, comprenant les étapes consistant à :
- gazéifier les déchets/biomasse dans des conditions anaérobies pour produire une matière de biomasse/déchets gazéifiée,
- injecter la matière de biomasse/ déchets gazéifiée dans une zone de décharge d'arc d'une torche à plasma, où la torche à plasma fournit un jet d'air à une vitesse de 600 à 800 m/s et à une température comprise entre 3 000 et 5 000°C dans la zone de décharge d'arc, élever la température du biosyngaz jusqu'à au moins 1 250°C, et injecter de l'air frais dans la zone de décharge d'arc pour maintenir un degré d'oxydation dans la plage 0,2 < CO₂/(CO + CO₂) < 0,4,
- injecter le flux de gaz sortant de la zone de décharge d'arc dans un réacteur de décomposition où le temps de séjour du gaz est d'environ 2 secondes et la température est maintenue à environ 1 250°C,
- refroidir le mélange de gaz traité thermiquement à une température de 150°C pour former un biosyngaz traité thermiquement,
- soumettre le biosyngaz traité thermiquement à des mesures de nettoyage pour éliminer des éléments/composés qui sont toxiques vis-à-vis des catalyseurs de la synthèse de Fischer-Tropsch jusqu'à au moins un niveau tolérable pour les catalyseurs de la synthèse de Fischer-Tropsch, et
- faire passer le biosyngaz traité thermiquement nettoyé à travers une synthèse de Fischer-Tropsch pour une production de biocarburants.

2. Procédé selon la revendication 1, **caractérisé en ce que** les composés toxiques sont l'un ou plusieurs des suivants : composés contenant des métaux alcalino-terreux, du soufre, des halogènes, et de l'azote.

3. Procédé selon la revendication 1 ou 2, **caractérisé en ce que** le biosyngaz traité thermiquement est conditionné en ajustant le rapport H₂:CO par une réaction de transformation à l'eau convertissant le CO le syngaz en CO₂ et H₂ en faisant réagir CO avec de l'eau, avant d'entrer dans la synthèse de Fischer-Tropsch.

4. Procédé selon la revendication 3, **caractérisé en ce que** le conditionnement du biosyngaz traité thermiquement comprend également l'élimination d'au moins une partie du CO₂ dans le biosyngaz.

5. Procédé selon la revendication 4, **caractérisé en ce que** le conditionnement du biosyngaz traité thermiquement comprend également l'élimination d'au moins une partie du N₂ dans le biosyngaz.

6. Procédé selon la revendication 1, **caractérisé en ce que** le gazéificateur est alimenté avec une biomasse.

7. Procédé selon la revendication 6, **caractérisé en ce que** la biomasse comprend une biomasse contenant de la cellulose.

8. Procédé selon la revendication 7, **caractérisé en ce que** les déchets comprennent un ou plusieurs des matériels suivants : déchets municipaux, fractions de déchets industriels, déchets de l'industrie alimentaire, et déchets de l'agriculture et/ou industrie de traitement du poisson.
